# FASCICULE DE BREVET EUROPEEN

(11) **EP 2 312 154 B1**
(45) Date de publication et mention de la délivrance du brevet: **09.05.2012**
(21) Numéro de dépôt: 10187290.1
(22) Date de dépôt: 12.10.2010
(51) Int. Cl.: F03G 7/06

(54) **Générateur thermoélectrique**
Thermoelektrischer Generator
Thermoelectric generator

(30) Priorité: 12.10.2009 FR 0957107
(43) Date de publication de la demande: 20.04.2011
(73) Titulaire: STMicroelectronics (Crolles 2) SAS, 38920 Crolles (FR)
(72) Inventeur: Skotnicki, Thomas, 38920 Crolles-Montfort (FR)
(74) Mandataire: de Beaumont, Michel

(56) Documents cités:
- WO-A1-02/48507
- US-A- 4 742 678
- US-A1- 2003 121 260
- US-B1- 6 374 607

## Description

### Domaine de l'invention

La présente invention concerne un générateur thermoélectrique, c'est-à-dire un dispositif adapté à produire de l'électricité à partir d'une source de chaleur. Elle vise notamment l'exploitation de l'énergie thermique dégagée par certains équipements, par exemple des boîtiers électroniques, un pot d'échappement d'une voiture, un toit de maison, ou toute autre surface chaude.

### Exposé de l'art antérieur

Dans certains dispositifs mobiles, par exemple des téléphones, des montres, ou des stimulateurs cardiaques, on a proposé d'utiliser des micro-générateurs pour produire de l'électricité à partir des vibrations mécaniques résultant des mouvements de l'utilisateur. Ceci permet de recharger au moins partiellement les batteries du dispositif. Un inconvénient d'une telle solution est qu'elle ne peut pas être utilisée dans le cas d'un équipement fixe, par exemple un poste de télévision ou un ordinateur.

On a également proposé des dispositifs adaptés à convertir directement de la chaleur en électricité via l'effet Seebeck. En effet, on a observé qu'il apparaît une différence de potentiel à la jonction de deux matériaux conducteurs soumis à une différence de température. Toutefois, de tels dispositifs ont un rendement très faible. Dans la pratique, l'utilisation de l'effet Seebeck se limite principalement à des applications de mesure de température.

On a par ailleurs proposé des générateurs thermoélectriques à micro-turbine, comprenant par exemple des turbines de l'ordre de 4 mm de diamètre et adaptés à être intégrés dans des composants électroniques. Toutefois, ces dispositifs sont coûteux car ils comprennent des parties mécaniques rotatives difficiles à réaliser est considéré comme le document decrivant l'ètat de la technique antérieure le plus proche

### Résumé

Ainsi, un objet d'un mode de réalisation de la présente invention est de prévoir un générateur thermoélectrique palliant au moins certains des inconvénients des solutions de l'art antérieur.

Un objet d'un mode de réalisation de la présente invention est de prévoir un tel générateur facile à réaliser.

Un objet d'un mode de réalisation de la présente invention est de prévoir un tel générateur facile à intégrer dans des équipements classiques.

Ainsi, un mode de réalisation de la présente invention prévoit un générateur thermoélectrique comprenant une membrane maintenue par des extrémités latérales et adaptée à prendre une première forme lorsque sa température atteint un premier seuil et une seconde forme lorsque sa température atteint un second seuil supérieur au premier seuil ; au moins un élément électriquement conducteur solidaire de la membrane et reliant les extrémités latérales de la membrane ; et des moyens adaptés à générer, au niveau de la membrane, un champ magnétique orthogonal à la direction de déplacement de la membrane, les extrémités latérales de la membrane étant reliées à des bornes de sortie du générateur.

Selon un mode de réalisation de la présente invention, la membrane est métallique.

Selon un mode de réalisation de la présente invention, la membrane, dans sa première forme, est adaptée à être en contact avec une paroi chaude et, dans sa seconde forme, est adaptée à être en contact avec une paroi froide.

Selon un mode de réalisation de la présente invention, la membrane comprend une lame métallique principale et, à ses extrémités latérales, des portions de couche, superposées à la lame métallique principale, en un matériau de coefficient de dilatation thermique inférieur à celui de la lame métallique principale, les extrémités latérales venant s'appuyer sur un support fixe.

Selon un mode de réalisation de la présente invention, le générateur est adapté à être monté sur une puce de circuit intégré.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A et 1B sont des vues en coupe schématiques d'un exemple de réalisation d'un générateur thermoélectrique ;
la figure 2 est un diagramme illustrant en partie le principe de fonctionnement du générateur thermoélectrique décrit en relation avec les figures 1A et 1B ; et
la figure 3 est une vue en coupe plus détaillée illustrant le fonctionnement du générateur thermoélectrique des figures 1A et 1B.

### Description détaillée

Par souci de clarté, de mêmes éléments ont été désignés par de mêmes références aux différentes figures et, de plus, les diverses figures ne sont pas tracées à l'échelle.

Un aspect d'un mode de réalisation de la présente invention est de prévoir un dispositif adapté à :
- convertir de l'énergie thermique en énergie mécanique à l'aide d'une membrane mobile entre deux positions prévue pour changer de forme lorsque sa température varie ; et
- convertir l'énergie mécanique produite par la membrane en énergie électrique.

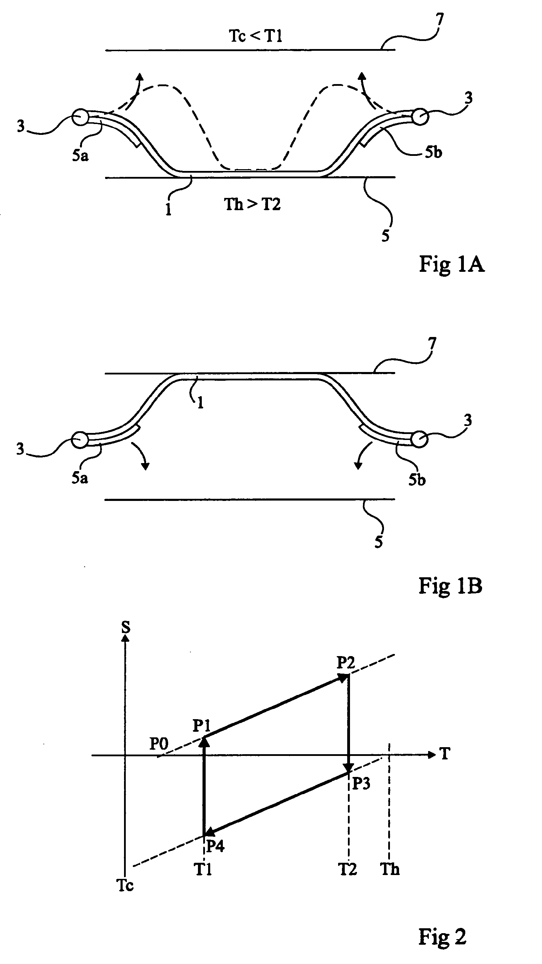

Les figures 1A et 1B sont des vues en coupe schématiques d'un exemple de réalisation d'un générateur thermoélectrique. Ce générateur comprend une membrane métallique 1 fixée par ses extrémités latérales à un support 3. Dans cet exemple la membrane 1 a, en vue de dessus, une forme rectangulaire allongée et des dimensions de l'ordre de quelques centimètres de longueur et quelques millimètres de largeur. Toutefois, la membrane peut avoir toute autre forme ou taille. A titre d'exemple, la membrane pourra avoir des dimensions micrométriques et être réalisée selon des technologies de fabrication de type MEMS (de l'anglais "MicroElectroMechanical Systems").

Dans cet exemple, le support 3 comprend deux axes cylindriques parallèles fixes. La membrane est disposée entre les deux axes, ses extrémités latérales venant s'appuyer sur les axes. Les extrémités latérales de la membrane ont une section sensiblement de même forme cylindrique que les axes du support 3, de façon que la membrane puisse passer, lorsqu'elle est soumise à une pression, d'une position haute à une position basse, par coulissement de ses extrémités latérales autour des axes du support 3.

La membrane 1 est prévue pour alterner entre deux formes lorsque sa température varie. Dans sa première forme, la membrane 1 est incurvée vers le bas, comme cela est représenté en figure 1A. Cette première forme correspond à un état de repos, pris par la membrane lorsque sa température est inférieure à un premier seuil T1. Dans sa seconde forme, la membrane est incurvée vers le haut, comme cela est représenté en figure 1B. La seconde forme est prise par la membrane lorsque sa température est supérieure à un second seuil T2 supérieur ou égal à T1. On considère ici une membrane fonctionnant selon un cycle d'hystérésis, c'est-à-dire que le second seuil T2 est supérieur au premier seuil T1.

Selon un mode de réalisation, les extrémités latérales de la membrane 1 comprennent des lames bimétalliques. A titre d'exemple, si la membrane 1 est réalisée en un métal à faible coefficient de dilatation thermique, on prévoit de déposer, superposées à ses extrémités latérales, des couches 5a, 5b d'un matériau à fort coefficient de dilatation thermique. En raison de la différence de coefficients de dilatation thermique, les lames bimétalliques s'incurvent progressivement dans un sens ou dans l'autre lorsque la température de la membrane varie. La déformation des bilames sous l'effet des variations de température provoque un effet ressort, permettant d'imposer à la membrane deux formes (position haute et position basse), en fonction de la température de la membrane, et une transition rapide d'une forme à l'autre. La figure 1A illustre de façon schématique, par des traits en pointillés, une forme de transition de la membrane lors de son passage rapide de la position basse à la position haute, après que la température de la membrane a atteint le seuil T2.

On prévoit de disposer la membrane 1 entre deux parois 5 et 7 en regard l'une de l'autre. La paroi inférieure 5 est une paroi chaude, par exemple une paroi métallique d'un pot d'échappement de voiture, le toit d'une maison, un boîtier d'une puce de circuit intégré, ou toute autre surface chaude d'une puce de circuit intégré ou autre circuit électronique. La paroi supérieure 7 est une paroi froide, c'est-à-dire que sa température est sensiblement inférieure à celle de la paroi chaude. Il peut s'agir d'un radiateur, d'un boîtier externe d'un appareil électronique, ou simplement de l'air ambiant. La disposition est choisie de façon que la membrane vienne, dans sa première forme, en contact avec la paroi chaude 5, et dans sa seconde forme, en contact avec la paroi froide 7.

La figure 2 est un diagramme illustrant de façon schématique le principe de conversion de l'énergie thermique de la paroi chaude du générateur en énergie mécanique. Ce diagramme illustre l'évolution des contraintes mécaniques S s'exerçant dans la membrane en fonction de la température T de la membrane. Lors d'une phase initiale P0, la source de chaleur ne fonctionne pas et la température de la membrane est inférieure à T1. La membrane est alors dans sa première forme, en contact avec la paroi chaude (en ce cas froide) du générateur. Lorsque le système se met à chauffer, la température de la membrane, en contact avec la paroi chaude, augmente progressivement.

On considère par la suite un régime de fonctionnement établi, c'est-à-dire que les parois chaude et froide du générateur thermoélectrique sont à des températures sensiblement constantes, respectivement Th et Tc, avec Tc < T1 < T2 < Th. Le générateur parcourt alors périodiquement un cycle P1-P2-P3-P4.

Au point P1, la température de la membrane est égale au premier seuil, T1, et la membrane est dans sa première forme, en contact avec la paroi chaude. La température de la membrane augmente progressivement, entre les points P1 et P2. Il en résulte une incurvation de ses extrémités latérales bimétalliques.

Au point P2, la température de la membrane atteint le second seuil, T2, de changement de forme. La membrane prend alors brusquement sa seconde forme, et vient en contact avec la paroi froide du générateur.

Ensuite, à partir du point P3, la température de la membrane, en contact avec la paroi froide, diminue progressivement, entraînant une incurvation de ses extrémités latérales bimétalliques.

Au point P4, la température de la membrane atteint le premier seuil, T1, de changement de forme. La membrane reprend alors brusquement sa première forme, et vient en contact avec la paroi chaude du générateur. Le cycle recommence alors à partir du point P1.

Ainsi, l'énergie thermique de la paroi chaude est transférée par incréments par la membrane vers la paroi froide. Ce transfert entraîne des déplacements de la membrane à une fréquence dépendant notamment des dimensions, des températures des parois chaude et froide, et des matériaux utilisés.

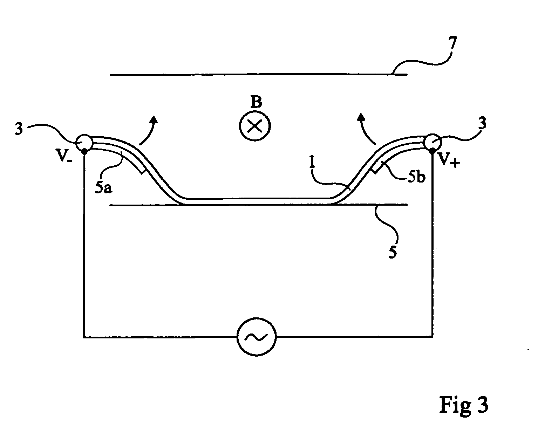

La figure 3 est une vue en coupe schématique illustrant un mode de réalisation d'un système de conversion de l'énergie mécanique de la membrane en énergie électrique.

La membrane 1 du générateur est placée dans un champ magnétique B, par exemple généré par des aimants (non représentés). Dans cet exemple, le champ B est parallèle aux axes du support 3 de la membrane. Du fait des déplacements de la membrane métallique conductrice dans le champ B, selon un direction orthogonale au champ B, il apparaît une différence de potentiel V₊-V₋ entre les extrémités latérales de la membrane. On pourra prévoir de former des bornes de sortie du générateur reliées aux extrémités latérales de la membrane, par exemple par l'intermédiaire du support 3.

Pour optimiser le rendement du générateur, il est souhaitable que la différence de température Th-Tc entre les parois chaude et froide soit maximale.

Pour améliorer le contact thermique entre la membrane et les parois chaude et froide, on pourra si nécessaire prévoir un film d'huile thermiquement conductrice sur chacune des parois. De plus, il est préférable que la membrane présente une faible capacité thermique afin de favoriser les phénomènes de transfert de chaleur entre la paroi chaude et la paroi froide.

Des modes de réalisation particuliers de la présente invention ont été décrits. Diverses variantes et modifications apparaîtront à l'homme de l'art.

En particulier, on a décrit un générateur thermoélectrique dans lequel les mouvements rapides d'une membrane métallique mobile dans un champ magnétique génèrent, entre les extrémités latérales de la membrane, une différence de potentiel. On pourra également prévoir une membrane mobile non conductrice, sur laquelle sont disposés un ou plusieurs conducteurs orthogonaux au champ magnétique.

De façon plus générale, l'homme de l'art saura prévoir d'autres moyens adaptés à convertir l'énergie mécanique de la membrane mobile en énergie électrique.

Par ailleurs, on a prévu ci-dessus l'utilisation d'une membrane entre deux axes fixe de support, les extrémités latérales de la membrane étant formées de lames bimétalliques. On pourra prévoir d'autres moyens, par exemple des ressorts, adaptés à imposer deux formes à la membrane en fonction de sa température, et une transition rapide entre les deux formes. Plus généralement, on pourra utiliser tout moyen connu, pour réaliser une membrane mobile entre deux formes en fonction de la température.

Par ailleurs, la présente invention ne se limite à l'utilisation des sources de chaleur mentionnées ci-dessus pour faire fonctionner le générateur thermoélectrique. Selon une variante de réalisation non représentée, la paroi chaude est directement la face arrière du substrat d'une puce de circuit intégré. Dans cette variante, la membrane vient, dans sa première forme, épouser la face arrière du substrat.

Plus généralement, l'homme de l'art saura prévoir tout moyen adapté à rendre le générateur facile à utiliser, par exemple un boitier en deux parties thermiquement conductrices séparées l'une de l'autre par un matériau isolant, la membrane venant, dans sa première forme, en contact avec la première partie du boîtier, et, dans sa seconde forme, en contact avec la seconde partie du boîtier.

En outre, la présente invention ne se restreint pas aux moyens décrits ci-dessus de connexion de la membrane mobile aux bornes de sortie du générateur. L'homme de l'art saura mettre en oeuvre tout autre moyen de connexion adapté.

## Revendications

1. Générateur thermoélectrique comprenant :
une membrane (1) maintenue par des extrémités latérales et adaptée à prendre une première forme lorsque sa température atteint un premier seuil (T1) et une seconde forme lorsque sa température atteint un second seuil (T2) supérieur au premier seuil ;
au moins un élément électriquement conducteur solidaire de la membrane et reliant les extrémités latérales de la membrane ; et
des moyens adaptés à générer, au niveau de la membrane, un champ magnétique (B) orthogonal à la direction de déplacement de la membrane, les extrémités latérales de la membrane étant reliées à des bornes de sortie (V₊, V₋) du générateur.

2. Générateur selon la revendication 1, dans lequel la membrane est métallique, ledit au moins un élément conducteur et la membrane étant confondus.

3. Générateur selon la revendication 1 ou 2, dans lequel la membrane, dans sa première forme, est adaptée à être en contact avec une paroi chaude (5) et, dans sa seconde forme, est adaptée à être en contact avec une paroi froide (7).

4. Générateur selon l'une quelconque des revendications 1 à 3, dans lequel la membrane comprend une lame métallique principale et, à ses extrémités latérales, des portions de couche (5a, 5b), superposées à la lame métallique principale, en un matériau de coefficient de dilatation thermique inférieur à celui de la lame métallique principale, les extrémités latérales venant s'appuyer sur un support fixe (3).

5. Générateur selon l'une quelconque des revendications 1 à 4, adapté à être monté sur une puce de circuit intégré.

## Claims

1. A thermoelectric generator comprising:
a membrane (1) maintained by lateral ends and capable of taking a first shape when its temperature reaches a first threshold (T1) and a second shape when its temperature reaches a second threshold (T2) greater than the first threshold;
at least one electrically conductive element attached to the membrane and connecting the lateral ends of the membrane; and
means capable of generating, at the level of the membrane, a magnetic field (B) orthogonal to the membrane displacement direction, the lateral ends of the membrane being connected to output terminals (V₊, V₋) of the generator.

2. The generator of claim 1, wherein the membrane is metallic.

3. The generator of any of claim 1 or 2, wherein the membrane, in its first shape, is capable of being in contact with a hot wall (5) and, in its second shape, is capable of being in contact with a cold wall (7).

4. The generator of any of claims 1 to 3, wherein the membrane comprises a main metal strip and, at its lateral ends, layer portions (5a, 5b), superposed to the main metal strip, made of a material having a thermal expansion coefficient lower than that of the main metal strip, the lateral ends bearing against a fixed support (3).

5. The generator of any of claims 1 to 4, wherein the generator is capable of being assembled on an integrated circuit chip.

## Patentansprüche

1. Ein thermoelektrischer Generator, der Folgendes aufweist:
eine Membran (1), die von Seitenenden gestützt wird und geeignet ist eine erste Form einzunehmen, wenn ihre Temperatur einen ersten Schwellwert (T1) erreicht, und eine zweite Form, wenn ihre Temperatur einen zweiten Schwellwert (T2) erreicht, der größer ist als der erste Schwellwert;
wenigstens ein elektrisch leitendes Element, das mit der Membran verbunden ist und das die Seitenenden der Membran verbindet; und
Mittel, die geeignet sind auf der Höhe der Membran ein Magnetfeld (B) zu erzeugen, das senkrecht zu der Membranversatzrichtung ist, wobei die Seitenenden der Membran mit Ausgangsanschlüssen (V+, V-) des Generators verbunden sind.

2. Der Generator nach Anspruch 1, wobei die Membran metallisch ist.

3. Der Generator nach einem der Ansprüche 1 oder 2, wobei die Membran in ihrer ersten Form geeignet ist mit einer heißen Wand (5) in Kontakt zu sein und in ihrer zweiten Form geeignet ist mit einer kalten Wand (7) in Kontakt zu sein.

4. Der Generator nach einem der Ansprüche 1 bis 3, wobei die Membran einen Hauptmetallstreifen und an ihren Seitenenden Lagenteile (5a, 5b) aufweist, die mit dem Hauptmetallstreifen überlagert sind, und die aus einem Material hergestellt sind, das einen thermischen Ausdehnungskoeffizienten aufweist, der geringer ist als der des Hauptmetallstreifens, wobei die Seitenenden an einem befestigten Träger (3) abgestützt sind.

5. Der Generator nach einem der Ansprüche 1 bis 4, wobei der Generator geeignet ist auf einem integrierten Schaltkreis aufgebaut zu sein.
